# EUROPEAN PATENT APPLICATION

(11) **EP 2 777 894 A2**
(43) Date of publication of application: **17.09.2014**
(21) Application number: 14157605.8
(22) Date of filing: 04.03.2014
(51) Int. Cl.: B25J 9/00

(54) **Manufacturing system comprising robot cell apparatuses, and method of manufacturing a product**

(30) Priority: 14.03.2013 JP 2013052060
(71) Applicant: Kabushiki Kaisha Yaskawa Denki, Kitakyushu-shi, Fukuoka 806-0004 (JP)
(72) Inventor: Fukuda, Takuya, Kitakyushu-shi, Fukuoka 806-0004 (JP); Ando, Shingo, Kitakyushu-shi, Fukuoka 806-0004 (JP)
(74) Representative: Viering, Jentschura & Partner Patent- und Rechtsanwälte

(57) **Abstract**

A manufacturing system (1) includes a first robot cell apparatus (10) including a first manufacturing robot (12) and a first rack (14) to which the first manufacturing robot (12) is fixed, a second robot cell apparatus (20) including a second manufacturing robot (12) and a second rack (14) to which the second manufacturing robot (12) is fixed, the second robot cell apparatus (20) being disposed adjacent to the first robot cell apparatus (10), and a transport path setter (54) that sets a transport path (T) of a transport robot (60) that performs at least one of receiving a workpiece from the first robot cell apparatus (10) and supplying a workpiece component to the first robot cell apparatus (10). In the manufacturing system (1), a space (MA) through which the transport robot (60) is movable is provided under each of the first and second racks (14), and the transport path setter (54) sets the transport path (T) of the transport robot (60) so that the transport path (T) passes through at least one of the spaces (MA).

## Description

### BACKGROUND OF THE INVENTION

### 1. Field of the Invention

The embodiments disclosed herein relate to a manufacturing system, a robot cell apparatus, and a method of manufacturing a product.

### 2. Description of the Related Art

Cellular manufacturing can be used to manufacture various products, such as electric products or electronic products. There have been proposed various technologies for automating cellular manufacturing by using assembly robots (see, for example, Japanese Unexamined Patent Application Publication No. 2008-229738).

### SUMMARY OF THE INVENTION

As described above, technologies for automating cellular manufacturing by using assembly robots have been proposed. However, in order to increase the efficiency of cellular manufacturing, it is desired that cell arrangement can be flexibly changed in accordance with the types of products to be manufactured.

Accordingly, it is an object of the disclosure to provide a manufacturing system, a robot cell apparatus, and a method of manufacturing a product, with which the degree of freedom of cell arrangement can be increased.

According to an aspect of the disclosure, a manufacturing system includes a first robot cell apparatus including a first manufacturing robot and a first rack to which the first manufacturing robot is fixed, a second robot cell apparatus including a second manufacturing robot and a second rack to which the second manufacturing robot is fixed, the second robot cell apparatus being disposed adjacent to the first robot cell apparatus, and a transport path setter that sets a transport path of a transport robot that performs at least one of receiving a workpiece from the first robot cell apparatus and supplying a workpiece component to the first robot cell apparatus. In the manufacturing system, a space through which the transport robot is movable is provided under each of the first and second racks, and the transport path setter sets the transport path of the transport robot so that the transport path passes through at least one of the spaces.

With the present disclosure, the degree of freedom of cell arrangement can be increased.

### BRIEF DESCRIPTION OF THE DRAWINGS

Fig. 1 is a block diagram of a manufacturing system.
Fig. 2 is a front view of a robot cell apparatus.
Fig. 3 is a side view of the robot cell apparatus illustrated in Fig. 2.
Fig. 4 is a schematic plan view illustrating an exemplary arrangement of robot cell apparatuses.
Fig. 5 is a side view of the robot cell apparatus illustrated in Fig. 2 in a state in which a transport robot is located under the robot cell apparatus.

### DESCRIPTION OF THE EMBODIMENTS

Hereinafter, embodiments of a manufacturing system and robot cell apparatuses of the manufacturing system will be described in detail with reference to the drawings. In the following description, the same elements and elements having the same functions will be denoted by the same numerals, and overlapping description will be omitted.

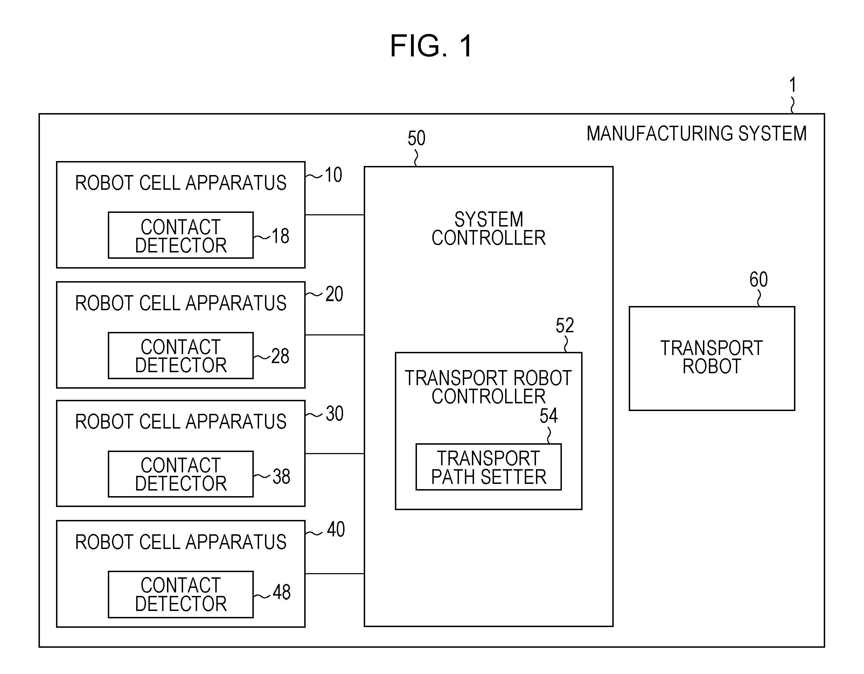

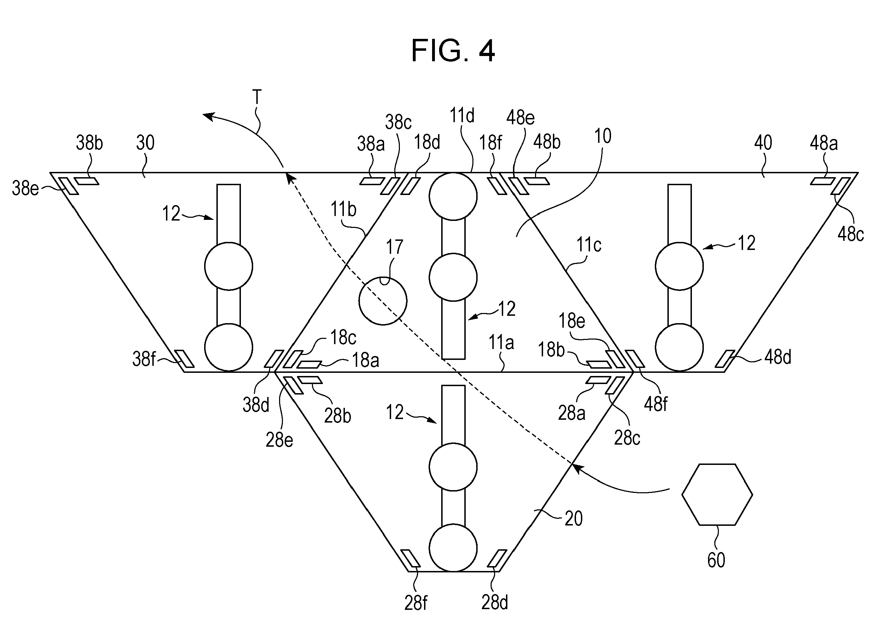

As illustrated in Fig. 1, a manufacturing system 1 includes a plurality of robot cell apparatuses 10, 20, 30, and 40; a system controller 50 that integrally controls the robot cell apparatuses 10, 20, 30, and 40; and a transport robot 60. The transport robot 60 receives a processed workpiece from each of the robot cell apparatuses 10, 20, 30, and 40, or supplies a workpiece component necessary for assembling a product to each of the robot cell apparatuses 10, 20, 30, and 40. The robot cell apparatuses 10, 20, 30, and 40 are arranged so as to perform so-called cellular manufacturing. Fig. 4 is a schematic plan view illustrating an exemplary arrangement of the robot cell apparatuses 10, 20, 30, and 40, which are arranged adjacent to each other. Under the integral control by the system controller 50, the robot cell apparatuses 10, 20, 30, and 40 manufactures a product by performing various assembly operations, such as attaching a predetermined workpiece component to a workpiece, which is a semifinished product.

The present embodiment will be described by using a manufacturing system having the four robot cell apparatuses 10, 20, 30, and 40 as an example. However, this is not a limitation. Two, three, or five or more robot cell apparatuses may constitute a manufacturing system.

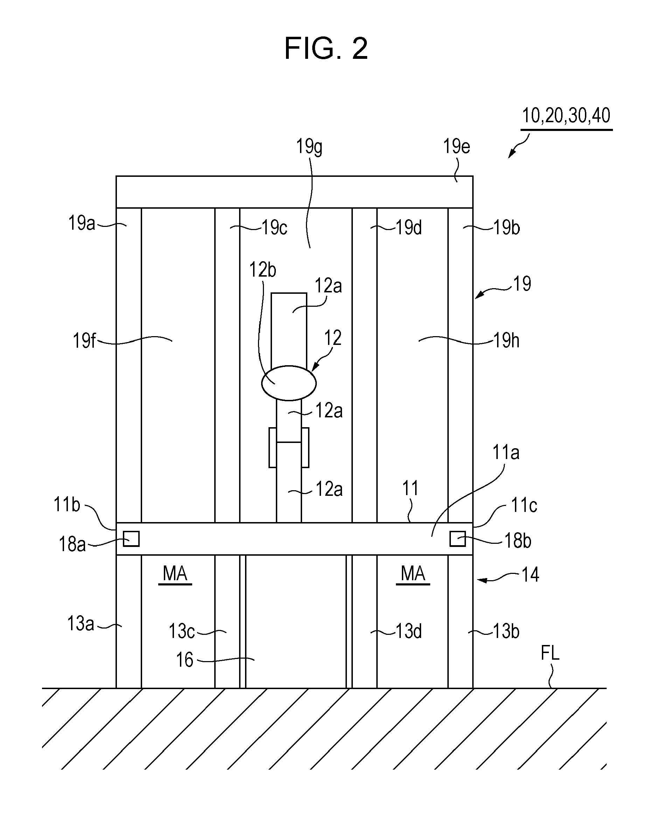

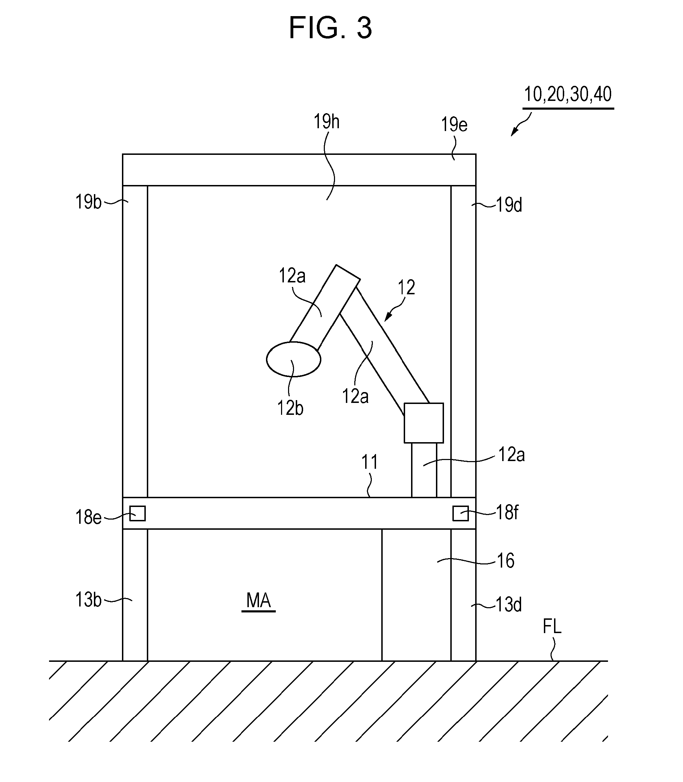

Referring to Figs. 2 and 3, the robot cell apparatuses 10, 20, 30, and 40 of the manufacturing system 1 will be described. In order to avoid overlapping description, the robot cell apparatus 10 will be used as an example. The basic structures of the other robot cell apparatuses 20, 30, and 40 of the manufacturing system 1 are the same as that of the robot cell apparatus 10. In a case where the robot cell apparatuses 10, 20, 30, and 40 perform different operations, the structures of robots and the like may differ depending on the types of the operations.

As illustrated in Figs. 2 and 3, the robot cell apparatus 10 includes a manufacturing robot 12, a rack 14, a controller 16, contact detectors 18 (18a to 18f), and a booth 19. The booth 19 includes four columns 19a to 19d, a top plate 19e supported by the columns 19a to 19d, and transparent covers 19f to 19h. The booth 19 protects the manufacturing robot 12 from the outside. The front side, for example, of the booth 19 is open.

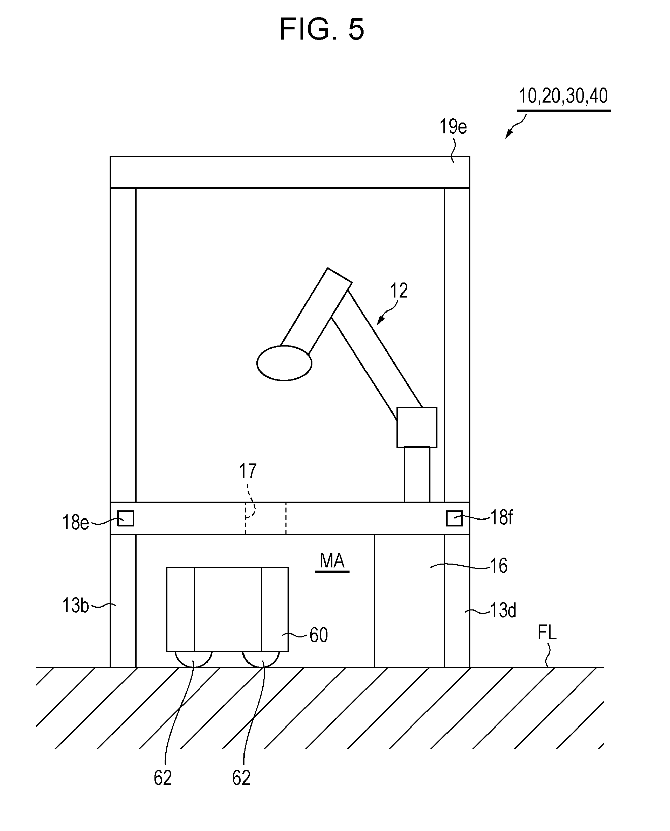

The manufacturing robot 12 is, for example, a six-axis assembly robot. The manufacturing robot 12 includes robot arms 12a, which are rotatably connected to each other, and a hand 12b attached to an end of the connected robot arms 12a. The manufacturing robot 12 holds a workpiece component, which has been transported by the transport robot 60 (see Fig. 5) and stored in an apparatus cabinet, with the hand 12b, and performs an operation, such as attaching the workpiece component to a workpiece, which is a semifinished product. Moreover, the manufacturing robot 12 transfers a processed workpiece to the transport robot 60. The controller 16 controls an assembly operation or the like performed by the manufacturing robot 12. In the example illustrated in Figs. 2 and 3, the manufacturing robot 12 is a single-arm robot. However, the manufacturing robot 12 may be an assembly robot of another type, such as a double-arm robot, or a robot that performs an operation other than assembly (such as application of an adhesive).

The manufacturing robot 12 is fixed to and supported by the rack 14. A base portion of the manufacturing robot 12 is connected and fixed to the rack 14. The rack 14 includes a polygonal workstage 11 on which the manufacturing robot 12 performs an assembly operation and legs 13a to 13d that support the workstage 11 from below at the corners of the workstage 11. In the present embodiment, the workstage 11 is, for example, a plate having a trapezoidal shape in plan view. The workstage 11 may be a plate having a different polygonal shape, such as a rectangular shape or a hexagonal shape, or may be a plate having a circular shape or a polygonal shape having an arc portion. The shape of the robot cell apparatus 10 in plan view is defined by the shape of the workstage 11 in plan view.

The legs 13a to 13d have, for example, rectangular cross-sectional shapes. The legs 13a to 13d are connected to lower surfaces of the corners of the workstage 11 and support the workstage 11 and the manufacturing robot 12 fixed to the workstage 11. Because the rack 14 is configured to support the workstage 11 with, for example, the four legs 13a to 13d, a predetermined space MA is provided under the rack 14. The space MA, which is a region through which the transport robot 60 moves, has a height that allows the transport robot 60 to move therethrough (see Fig. 5). In plan view, the space MA occupies a region of the floor FL corresponding to the shape (for example, a trapezoidal shape) of the workstage 11 excluding regions on which the legs 13a to 13d and the controller 16 are disposed. In other words, the space MA, through which the transport robot 60 is movable, is defined by the workstage 11, the legs 13a to 13d, the controller 16, and the floor FL on which the robot cell apparatus 10 is placed.

The controller 16 controls movement of the manufacturing robot 12. The controller 16 is a computer including a storage device, an electronic processor, an input device, and a display device. The controller 16 is communicatively connected to the manufacturing robot 12 and the system controller 50. The controller 16 sends and receives signals representing pieces of information about the amount of internal stock of workpiece components necessary for performing an operation assigned to the robot cell apparatus 10, the progress of the operation performed by the robot cell apparatus 10, the progress of operations performed by other robot cell apparatuses in upstream/downstream processes, and the like. The controller 16 controls movement of the manufacturing robot 12 on the basis of such pieces of information sent from and received by the controller. The controller 16 is disposed in a rear part (i.e. near the side surface 11d) of the robot cell apparatus 10 so that the lower end thereof reaches the floor FL, on which the robot cell apparatus 10 is placed.

The contact detectors 18 are contact sensors that detect whether or not the robot cell apparatus 10 is disposed adjacent to the other robot cell apparatuses 20, 30, and, 40, and, if so, in what manner they are disposed adjacent to each other. The contact detectors 18 are disposed in pairs at ends of three side surfaces 11a to 11c of the workstage 11, which correspond to the side surfaces of the robot cell apparatus 10. As illustrated in Figs. 2 to 4, in the present embodiment, the robot cell apparatus 10 includes three pairs of contact detectors 18a to 18f, which are disposed, for example, on three side surfaces 11a to 11c, excluding the side surface 11d on a rear part of the apparatus in which the controller 16 is disposed. Contact detectors 28 (28a to 28f), 38 (38a to 38f), and 48 (48a to 48f) of the robot cell apparatuses 20, 30, and 40, which are denoted as such in order to facilitate the following description, are the same as the contact detectors 18.

Identifiers representing positions on the workstage 11 (the robot cell apparatus 10) are assigned beforehand to the three pairs of contact detectors 18a to 18f. (For example, "the right end of the side surface 11a at the front of the apparatus" is assigned to the contact detector 18b.) The distances between pairs of the contact detectors 18a to 18f are the same as those of the contact detector 28, 38, and 48 of the other robot cell apparatuses 20, 30, and 40. Therefore, as described below, when one of the pairs of contact detectors 18a to 18f of the robot cell apparatus 10 face and contact one of the pairs of contact detectors 28, 38 or 48 of the robot cell apparatuses 20, 30, or 40 and the contact is detected by using flow of electrical current or the like, the one of the pairs of contact detectors 18a to 18f output the identifiers of the detected contact detectors to the system controller 50 via the controller 16.

Upon receiving the detected identifiers from the robot cell apparatuses 10, 20, 30, and 40, the system controller 50 calculates the state of arrangement of the robot cell apparatuses 10, 20, 30, and 40 on the basis of the detected identifiers. In the present embodiment, each of the detectors detects an object by using flow of electrical current that occurs when the detector physically and directly contacts the object. However, this is not a limitation. The detector may be a non-contact detector or the like.

Referring back to Fig. 1, the manufacturing system 1 will be described further. The system controller 50 integrally controls movement of the robot cell apparatuses 10, 20, 30, and 40. The system controller 50 is a computer including a storage device, an electronic processor, an input device, and a display device. The system controller 50 determines the timings at which workpiece components used in operations of the robot cell apparatuses 10, 20, 30, and 40 are to be supplied to the robot cell apparatuses 10, 20, 30, and 40. Moreover, the system controller 50 determines, for example, the timing at which processed workpieces processed in the robot cell apparatuses 10, 20, 30, and 40 are to be recovered (transferred). The system controller 50 includes a transport robot controller 52 that controls the transport robot 60, which supplies the workpiece components or recovers the processed workpieces on the basis of the determination results.

The transport robot controller 52 includes a transport path setter 54 that sets a transport path T of the transport robot 60. The transport robot controller 52 causes the transport robot 60 to move along the transport path T set by the transport path setter 54. The transport robot controller 52 sends a signal for controlling movement of the transport robot 60 through wireless communication.

When the system controller 50 receives a signal requesting supply of a predetermined workpiece component from one of the robot cell apparatuses 10, 20, 30, and 40, the transport path setter 54 sets the transport path T of the transport robot 60 through the spaces MA under the robot cell apparatuses 10, 20, 30, and 40 on the basis of the state of adjacent arrangement of the robot cell apparatuses 10, 20, 30, and 40 detected by the contact detector 18, 28, 38 and 48 and calculated and information about the current position of the transport robot 60 in the state of arrangement. The transport path setter 54 sets the transport path T so that, in plan view, the transport path T passes through a transfer portion 17 (see Figs. 4 and 5) of one of the robot cell apparatuses 10 and 20, 30 or 40 that is in need of the workpiece component. The transfer portion 17 is, for example, a hole in the workstage 11. Provided that the transport robot 60 can supply the workpiece component to the one of the robot cell apparatuses 10 and 20, 30 or 40, the transport path T may be set so as to pass near the transfer portion 17 in plan view. When setting the transport path T, the transport path setter 54 defines a region in which the controller 16 and legs 13 are disposed as a keep-out region, and excludes the keep-out region from the transport path T.

When the system controller 50 receives a signal indicating that processing of a workpiece has been finished and requesting recovery of the processed workpiece from one of the robot cell apparatuses 10, 20, 30, and 40, as in the case of supplying a workpiece component, the transport path setter 54 sets the transport path T of the transport robot 60 through the spaces MA under the robot cell apparatuses 10, 20, 30, and 40 on the basis of the state of arrangement of the robot cell apparatuses 10, 20, 30, and 40 detected by the contact detector 18, 28, 38, and 48 and calculated and information about the current position of the transport robot 60 in the state of arrangement. The transport path T is set to pass through the transfer portion 17 or near the transfer portion 17 as in the case of supplying a workpiece component.

As illustrated in Fig. 5, the transport robot 60 is a mobile robot having a plurality of wheels 62. The transport robot 60 supplies a necessary workpiece component to a predetermined one of the robot cell apparatuses 10, 20, 30, and 40 and recovers a processed workpiece to be transferred to another robot cell apparatus or the like. The transport robot 60 has a manipulator for supply and recovery. The transport robot 60 supplies a necessary workpiece component and recovers a processed workpiece through the transfer portion 17 of the robot cell apparatus 10. The transport robot 60 obtains its current position by detecting the number of rotation of the wheels 62, the steering direction, and the like. The transport robot 60 may obtain its position or correct its current position by using marks on the floor FL. The height of the spaces MA under the robot cell apparatuses 10, 20, 30, and 40 is greater than that of the transport robot 60, so that the transport robot 60 can freely move through the spaces MA.

Next, referring to Fig. 4, an exemplary method of setting the transport path T of the transport robot 60 by the transport path setter 54 will be described.

First, when the robot cell apparatuses 10, 20, 30, and 40 are disposed at predetermined positions for cellular manufacturing as illustrated in Fig. 4, each of the contact detectors 18, 28, 38, and 48 of the robot cell apparatuses 10, 20, 30, and 40 detects another contact detector facing the contact detector. In the example illustrated in Fig. 4, the contact detectors 18a and 18b of the robot cell apparatus 10 respectively contact the contact detectors 28b and 28a of the robot cell apparatus 20. Moreover, the contact detectors 18c and 18d of the robot cell apparatus 10 respectively contact the contact detectors 38d and 38c of the robot cell apparatus 30. Furthermore, the contact detectors 18e and 18f of the robot cell apparatus 10 respectively contact the contact detectors 48f and 48e of the robot cell apparatus 40.

The robot cell apparatuses 10, 20, 30, and 40 send identifiers detected by the contact detectors 18, 28, 38, and 48 to the system controller 50. The transport path setter 54 of the system controller 50 calculates a state of arrangement of the robot cell apparatuses 10, 20, 30, and 40 by using the identifiers. To be specific, the transport path setter 54 calculates a state of arrangement in which the side surface 11a at the front of the robot cell apparatus 10 is disposed adjacent to a side surface at the front of the robot cell apparatus 20 and that the side surfaces 11b and 11c of the robot cell apparatus 10 are respectively disposed adjacent to side surfaces of the robot cell apparatuses 20 and 30.

Next, the transport path setter 54 sets the transport path T so that, in plan view, the transport path T passes through the transfer portion 17 of the robot cell apparatus 10 for which the transport robot 60 is necessary and so that the transport path T passes through portions of the spaces MA (four substantially trapezoidal regions) in which passage of the transport robot 60 is not blocked by the controllers 16 and the legs 13. Then, the transport path setter 54 sends a wireless signal to the transport robot 60 so that the transport robot 60 may move along the set transport path T and supply a workpiece component to the robot cell apparatus 10 or recover a processed workpiece. Upon receiving the wireless signal, the transport robot 60 moves along the transport path T to the robot cell apparatus 10 and supplies the workpiece component or recovers the processed workpiece.

The robot cell apparatuses 10, 20, 30, and 40 obtain necessary workpiece components from the transport robot 60, which is controlled to perform such a transport operation; and manufactures a product by performing processing operations, such as attaching the workpiece component to a workpiece.

As described above, in the manufacturing system 1, the space MA, through which the transport robot 60 is movable, is provided under each of the racks 14 of the robot cell apparatuses 10, 20, 30, and 40. The transport path setter 54 sets the transport path T of the transport robot 60 so that the transport path T passes through at least one of the spaces MA. Thus, the transport robot 60 can freely move not only in a region on the floor FL in which the robot cell apparatuses 10, 20, 30, and 40 are not disposed but also in regions on the floor FL on which the robot cell apparatuses 10, 20, 30, and 40 are disposed. Therefore, with the manufacturing system 1, it is possible to arrange the robot cell apparatuses 10, 20, 30, and 40 in a manner that is preferable for cellular manufacturing, and therefore degree of freedom of the arrangement can be increased without the need for much consideration of the transport path of the transport robot 60.

In the manufacturing system 1, the robot cell apparatuses 10, 20, 30, and 40 respectively include the contact detectors 18, 28, 38, and 48 that detect whether or not the robot cell apparatuses 10, 20, 30, and 40 are disposed adjacent to each other. The transport path setter 54 calculates a state of arrangement of the robot cell apparatuses 10, 20, 30, and 40 on the basis of detection information (location information) detected by the contact detectors 18, 28, 38, and 48, and sets the transport path T of the transport robot 60 in accordance with the state of arrangement. Thus, it is possible to easily calculate the state of arrangement of the robot cell apparatuses 10, 20, 30, and 40 by simply providing the contact detectors 18, 28, 38, and 48 to the robot cell apparatuses 10, 20, 30, and 40.

In particular, the contact detectors 18, 28, 38, and 48 are disposed on the side surfaces of the robot cell apparatuses 10, 20, 30, and 40. The transport path setter 54 calculates the state of arrangement indicating which one of the side surfaces of one the robot cell apparatuses 10, 20, 30, and 40 are disposed adjacent to one of side surfaces of the other robot cell apparatuses 10, 20, 30, and 40 on the basis of whether the contact detectors 18, 28, 38, and 48 of the robot cell apparatuses 10, 20, 30, and 40 contact each other. Therefore, it is possible to calculate a necessary arrangement by using a simple structure.

In the manufacturing system 1, each of the robot cell apparatuses 10, 20, 30, and 40 includes the transfer portion 17, through which, for example, a workpiece component used in an operation performed by the manufacturing robot 12 is supplied. The transfer portion 17 overlaps the space MA in plan view. The transport path setter 54 sets the transport path T of the transport robot 60 so that the transport path T passes through the transfer portion 17 or near the transfer portion 17 in plan view. Thus, the transport robot 60 can more reliably supply a workpiece component and recover a processed workpiece.

In the manufacturing system 1, the rack 14 of each of the robot cell apparatuses 10, 20, 30, and 40 includes the workstage 11 on which processing is performed and the legs 13 that support the workstage 11. The space MA is defined by the workstage 11, the legs 13, and the like. Therefore, a space in which the transport robot 60 is movable is provided under each of the robot cell apparatus 10, 20, 30, and 40 by using the legs 13 each having a predetermined length. Therefore, without using a complex structure, a sufficient movement space can be provided for the transport robot 60.

A method of manufacturing a product by using the manufacturing system 1 is a method of manufacturing the product by using the robot cell apparatuses 10, 20, 30, and 40. The method includes calculating a state of arrangement of the robot cell apparatuses 10, 20, 30, and 40 under each of which the space MA through which the transport robot 60 is movable is provided, the transport robot 60 performing at least one of receiving a processed workpiece and supplying a workpiece component; setting the transport path T of the transport robot 60 so that the transport path T passes through at least one of the spaces MA in accordance with the state of arrangement calculated in the calculating; and attaching the workpiece component received from the transport robot 60 to a workpiece or transferring the processed workpiece to the transport robot 60 by using at least one of the robot cell apparatuses 10, 20, 30, and 40. Because the transport path T is determined as described above, it is possible to determine the arrangement of the robot cell apparatuses 10, 20, 30, and 40 without the need for much consideration of the transport path T, and thereby a more efficient arrangement for cell manufacturing can be freely determined.

Embodiments of the disclosure are not limited to the embodiments described above, and may be modified in various ways. For example, in the embodiments described above, solid members having a rectangular cross section are used as the legs 13a to 13d. However, provided that sufficient strength is ensured, members having an extendable and contractible telescopic mechanism may be used as the legs 13a to 13d of the robot cell apparatuses 10, 20, 30, and 40. In this case, it is easy to transport the robot cell apparatuses 10, 20, 30, and 40, because the height of the robot cell apparatuses 10, 20, 30, and 40 can be reduced. Moreover, the height of the apparatuses from the floor can be increased sufficiently when using the apparatuses, so that the transport robot 60 can move freely. The legs 13 may be configured to be removable from other members of the robot cell apparatuses 10, 20, 30, and 40. In this case, the same effect can be obtained.

In the embodiments described above, the transport robot 60 performs an operation of supplying a workpiece component and an operation of recovering a processed workpiece. Alternatively, the transport robot 60 may perform only one of these operations and another member may perform the other operation. In the embodiments described above, the system controller 50 includes the transport path setter 54, which sets the transport path T of the transport robot 60. Alternatively, the controller 16 of each of the robot cell apparatuses 10, 20, 30, and 40 may perform some or all of the functions of the transport path setter 54. In this case, the controllers 16 may set the transport path T of the transport robot 60 and control movement of the transport robot 60.

In the embodiments described above, it is not possible to set a transport path T that passes through the side surface 11d, because the controller 16 is disposed in a rear part of the apparatus. However, the transport path T may be set so as to pass through the side surface 11d by moving the controller 16 to a different part of the apparatus.

It should be understood by those skilled in the art that various modifications, combinations, subcombinations and alterations may occur depending on design requirements and other factors insofar as they are within the scope of the appended claims or the equivalents thereof.

## Claims

1. A manufacturing system (1) comprising:
a first robot cell apparatus (10) including a first manufacturing robot (12) and a first rack (14) to which the first manufacturing robot (12) is fixed;
a second robot cell apparatus (20) including a second manufacturing robot (12) and a second rack (14) to which the second manufacturing robot (12) is fixed, the second robot cell apparatus (20) being disposed adjacent to the first robot cell apparatus (10); and
a transport path setter (54) that sets a transport path (T) of a transport robot (60) that performs at least one of receiving a workpiece from the first robot cell apparatus (10) and supplying a workpiece component to the first robot cell apparatus (10),
wherein a space (MA) through which the transport robot (60) is movable is provided under each of the first and second racks (14), and the transport path setter (54) sets the transport path (T) of the transport robot (60) so that the transport path (T) passes through at least one of the spaces (MA).

2. The manufacturing system (1) according to Claim 1,
wherein the first and second robot cell apparatuses (10, 20) include detectors (18, 28) that detect whether the first and second robot cell apparatuses (10, 20) are disposed adjacent to each other, and
wherein the transport path setter (54) calculates a state of arrangement of the first and second robot cell apparatuses (10, 20) on the basis of detection information detected by the detectors (18, 28), and sets the transport path (T) of the transport robot (60) in accordance with the state of arrangement.

3. The manufacturing system (1) according to Claim 2,
wherein the detectors (18, 28) are disposed on side surfaces each of the first and second robot cell apparatuses (10, 20), and
wherein the transport path setter (54) calculates the state of arrangement indicating which one of the side surfaces of the second robot cell apparatus (20) is disposed adjacent to one of the side surfaces of the first robot cell apparatus (10) on the basis of whether there is contact between the detectors (18, 28) of the first robot cell apparatus (10) and the detectors (18, 28) of the second robot cell apparatus (20).

4. The manufacturing system (1) according to any one of Claims 1 to 3,
wherein the first robot cell apparatus (10) includes a transfer portion (17) through which the workpiece that has been processed by the first manufacturing robot (12) is transferred to the transport robot (60) or the workpiece component to be used in processing performed by the first manufacturing robot (12) is supplied from the transport robot (60), the transfer portion (17) overlapping the space (MA) in plan view, and
wherein the transport path setter (54) sets the transport path (T) of the transport robot (60) so that the transport path (T) passes through the transfer portion (17) or near the transfer portion (17) in plan view.

5. The manufacturing system (1) according to any one of Claims 1 to 4,
wherein the first rack (14) includes a workstage (11) on which processing is performed and a leg (13) that supports the workstage (11), and
wherein the space (MA) is defined by the workstage (11) and the leg (13).

6. The manufacturing system (1) according to any one of Claims 1 to 5,
wherein the first robot cell apparatus (10) includes a controller (16) that controls the first robot cell apparatus (10), and the controller (16) is disposed so that a lower end thereof reaches a floor (FL) on which the first robot cell apparatus (10) is disposed, and
wherein the transport path setter (54) sets the transport path (T) of the transport robot (60) so as to avoid a position at which the controller (16) is disposed.

7. The manufacturing system (1) according to any one of Claims 1 to 6, further comprising:
the transport robot (60) that performs one of receiving the workpiece from the first robot cell apparatus (10) and supplying the workpiece component to the first robot cell apparatus (10).

8. A robot cell apparatus that forms a manufacturing cell with another robot cell apparatus and manufactures a product, the robot cell apparatus comprising:
a manufacturing robot (12);
a controller (16) that controls the manufacturing robot (12);
a rack (14) to which the manufacturing robot (12) is fixed and under which a space (MA) through which a transport robot (60) is movable is provided, the transport robot (60) performing at least one of receiving a processed workpiece and supplying a workpiece component; and
a detector that detects whether the robot cell apparatus and the other robot cell apparatus are disposed adjacent to each other,
wherein the transport robot (60) moves through the space (MA) in accordance with a state of adjacent arrangement detected by the detector.

9. A method of manufacturing a product by using first and second robot cell apparatuses (10, 20), the method comprising:
calculating a state of arrangement of the first and second robot cell apparatuses (10, 20) under each of which a space (MA) through which a transport robot (60) is movable is provided, the transport robot (60) performing at least one of receiving a processed workpiece and supplying a workpiece component;
setting a transport path (T) of the transport robot (60) so that the transport path (T) passes through at least one of the spaces (MA) in accordance with the state of arrangement calculated in the calculating; and
attaching the workpiece component received from the transport robot (60) to a workpiece or transferring the processed workpiece to the transport robot (60) by using at least one of the first and second robot cell apparatuses (10, 20).
